# EUROPÄISCHE PATENTSCHRIFT

(11) **EP 0 672 315 B1**
(45) Veröffentlichungstag und Bekanntmachung des Hinweises auf die Patenterteilung: **29.01.1997**
(21) Anmeldenummer: 94900622.5
(22) Anmeldetag: 01.12.1993
(51) Int. Cl.: H02K 17/20

(54) **ROTORNUT**
ROTOR GROOVE
ENCOCHE DE ROTOR

(30) Priorität: 01.12.1992 AT 23689/92
(43) Veröffentlichungstag der Anmeldung: 20.09.1995
(73) Patentinhaber: ELIN MOTOREN, A-1141 Wien (AT)
(72) Erfinder: BERGER, Josef, A-1210 Wien (AT)
(74) Vertreter: Krause, Peter
(86) Internationale Anmeldenummer: AT9300181
(87) Internationale Veröffentlichungsnummer: WO9413054

(56) Entgegenhaltungen:
- DE-B- 1 190 094
- US-A- 2 350 012
- US-A- 3 832 583
- PATENT ABSTRACTS OF JAPAN, unexamined applications, E Field, Band 10, Nr. 268, 12 September 1986 THE PATENT OFFICE JAPANESE GOVERNMENT Seite 142 E 436 Nr. 61-92 143 (MATSUSHITA).
- PATENT ABSTRACTS OF JAPAN, unexamined applications, E Field, Band 13, Nr. 518, 20 November 1989 THE PATENT OFFICE JAPANESE GOVERNMENT Seite 91 E 848 Nr. 01-209 940 (MATSUSHITA).

## Beschreibung

Die Erfindung betrifft einen Kurzschlußkäfigläufer, welcher entlang des Umfanges des Läufers geschlossene Nuten, in welchen durch Einbringen von Aluminium Aluminiumläuferstäbe erzeugt werden, welche die Nut ausfüllen, wobei der Nutquerschnitt Nasen, die in den ideal gedachten Nutquerschnitt hineinragen, und Ausbuchtungen, die aus dem ideal gedachten Nutquerschnitt herausragen, aufweist.

Asynchronmaschinen mit Kurzschlußkäfigläufern finden wegen ihrer großen Vorzüge, wie z.B. niedrige Anschaffungs- und Betriebskosten, gute Anpassungsmöglichkeit an viele unterschiedliche Arbeitsmaschinen und geringe Wartung, eine weite Verbreitung. Sie sind überall dort einsetzbar, wo nur geringe Anforderungen an die Drehzahlkonstanz und den Drehstellbereich gestellt werden. In der Anlaufphase sind meist keine zusätzlichen Stellglieder erforderlich.

Bei Rotoren mit Aluminium-Druck- oder Schleudergußkäfigläufern im Drehzahlbereich über 6000 Upm kommt es immer wieder vor, daß durch die Verlagerung von Leiterstäben in ihrer Nut die Rotoren unwuchtig werden. Zu dieser Verlagerung der Leiterstäbe kommt es entweder schon beim Auskühlen des Aluminiums, bedingt durch die starke Schrumpfung, oder im Betrieb mit hohen Drehzahlen.

In der DE, B, 1 190 094 ist eine Befestigung der Stäbe im Käfigläufer elektrischer Maschinen beschrieben, bei welcher geprägte Nasen an den Stäben vorgesehen sind, die in entsprechende Aussparungen in den Läufernuten eingreifen.

Die US, A, 2 350 012 beschreibt einen Rotor mit geschlossenen Nuten, welche Nasen aufweist die in die Nut hineinragen und wodurch die Zahnbreite zwischen den Nuten stark variiert.

Die Aufgabe der Erfindung besteht nun darin, mit einfachen Mitteln einen Kurzschlußkäfigläufer zu schaffen, dessen Leiterstäbe so in ihrer Lage fixiert sind, daß selbst bei sehr hohen Drehzahlen keine Unwucht auftreten kann.

Die Aufgabe wird durch die Erfindung gelöst. Der Kurzschlußkäfigläufer ist dadurch gekennzeichnet, daß der ideal gedachte Nutquerschnitt in radialer Richtung in mindestens zwei Nutabschnitte geteilt ist, und daß die Nutabschnitte abwechselnd in bzw. gegen die Rotationsrichtung des Läufers verschoben sind, wobei die Zahnbreite zwischen zwei benachbarten Nuten über die gesamte Höhe der Nut gleich ist.

Mit der Erfindung ist es erstmals möglich, eine Nutform für einen Kurzschlußkäfigläufer zu schaffen, welche den Läuferstab in seiner Lage festhält und dadurch eine Unwucht mit Sicherheit verhindert.

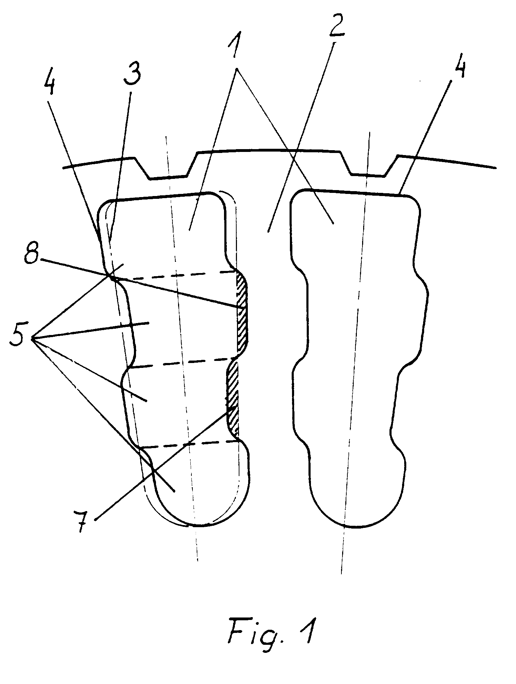

Anhand eines Ausführungsbeispieles wird die Erfindung nun näher erläutert. In Fig. 1 ist ein erfindungsgemäßer Nutquerschnitt 4 ersichtlich, bei dem der ideal gedachte Nutquerschnitt 3 strich-punktiert und der erfindungsgemäße Nutquerschnitt 4 stark umrandet dargestellt ist. Der ideal gedachte Nutquerschnitt 3 ist in radialer Richtung in vier Nutabschnitte 5 geteilt, wobei die Nutabschnitte 5 abwechselnd in bzw. gegen die Rotationsrichtung des Läufers verschoben sind. Dadurch ergibt sich der erfindungsgemäße Nutquerschnitt 4, wobei die Breite des Zahnes 2 zwischen den einzelnen erfindungsgemäßen Nuten 4, gegenüber der ideal gedachten Nut 3, unverändert ist. Diese Nutform verhindert mit Sicherheit ein Verlagern des Leiterstabes sowohl beim Abkühlen nach dem Einbringen des Aluminiums in die Nut als auch in hohen Drehzahlbereichen.

## Patentansprüche

1. Kurzschlußkäfigläufer, welcher entlang des Umfanges des Läufers geschlossene Nuten (1), in welchen durch Einbringung von Aluminium Aluminiumläuferstäbe erzeugt werden, welche die Nut (1) ausfüllen, wobei der Nutquerschnitt Nasen (7), die in den ideal gedachten Nutquerschnitt (3) hineinragen, und Ausbuchtungen (8), die aus dem ideal gedachten Nutquerschnitt (3) herausragen, aufweist, **gekennzeichnet dadurch,** daß der Nutquerschnitt (4) in radialer Richtung in mindestens zwei Nutabschnitte (5) geteilt ist, und daß die Nutabschnitte (5) gegenüber dem ideal gedachten Nutquerschnitt (3) abwechselnd in bzw. gegen die Rotationsrichtung des Läufers verschoben sind, so daß der Läuferstab sowohl nach Abkühlen des Aluminiums als auch bei hohen Drehzahlen in seiner Lage fixiert ist, wobei die Zahnbreite (2) zwischen zwei benachbarten Nuten (1) über die gesamte Höhe der Nut (1) gleich ist.

## Claims

1. A squirrel-cage armature which includes, through the periphery of the armature, closed slots wherein, by introducing aluminium material, aluminium armature bars are formed which fill said slot (1), with the right-end section of said slot being provided with heels (7) protuding inside the ideal dummy right-end section (3) of said slot, and recesses protuding inside said ideal dummy right-end section (3) of said slot, characterized in that said slot right-end section (4) is radially partitioned into at least two slot lengths (5), and in that said slot lengths (5) are shifted with respect to said ideal dummy right-end (3) of said slot, alternately towards the rotating direction of said armature and away from this rotating direction, such that said armature bar is fixedly positioned both at the completion of the aluminium cooling and for high rotation speeds, with the tooth length (2) between two adjacent slots (1) being the same through the overall height of said slot (1).

## Revendications

1. Induit à cage d'écureuil, qui comporte, le long de la périphérie de l'induit, des encoches fermées (1) dans lesquelles sont formées, par introduction d'aluminium, des barres d'induit en aluminium, qui remplissent l'encoche (1), la section droite de l'encoche présentant des talons (7) faisant saillie à l'intérieur de la section droite fictive idéale (3) de l'encoche, et des évidements (8) faisant saillie à l'extérieur de la section droite idéale fictive (3) de l'encoche, caractérisé en ce que la section droite (4) de l'encoche est divisée dans la direction radiale, en au moins deux tronçons d'encoche (5), et en ce que les tronçons d'encoche (5) sont décalés par rapport à la section droite idéale fictive (3) de l'encoche, alternativement dans la direction du sens de rotation de l'induit et à l'encontre de ce sens de rotation, de sorte que la barre d'induit est fixée dans sa position, aussi bien après le refroidissement de l'aluminium que pour les vitesses de rotation élevées, la largeur de dent (2) entre deux encoches voisines (1) étant la même sur toute la hauteur de l'encoche (1).
